# EUROPEAN PATENT APPLICATION

(11) **EP 4 691 582 A1**
(43) Date of publication of application: **11.02.2026**
(21) Application number: 24306344.3
(22) Date of filing: 09.08.2024
(51) Int. Cl.: A63F 13/57, G06T 17/00

(54) **EVENT-BASED PROCESSING OF SCENE DESCRIPTION FILES**

(71) Applicant: InterDigital CE Patent Holdings, SAS, 75017 Paris (FR)
(72) Inventor: FAIVRE D'ARCIER, Etienne, 35750 SAINT GONLAY (FR); FONTAINE, Loic, 35530 NOYAL SUR VILAINE (FR); LELIEVRE, Sylvain, 35760 MONTGERMONT (FR); HIRTZLIN, Patrice, 35830 BETTON (FR); JOUET, Pierrick, 35000 RENNES (FR)
(74) Representative: Vossius & Partner Patentanwälte Rechtsanwälte mbB

(57) **Abstract**

In an example embodiment, a method comprises parsing a scene description file describing a scene, the scene description file including at least a first property. In response to parsing of the first property, a first module associated with the first property is instantiated. A game engine registers to receive events raised by the first module. The first module operates to detect a first condition in the scene indicated by the first property and responsively to raise a first event. The game engine operates to respond to the first event.

## Description

### BACKGROUND

The present application is related to the processing of scene description files. A scene description file describes the content of a 3D scene. The description may be provided in terms of nodes, transformations, transform hierarchy, meshes, materials, cameras, animations, and the like. There are several available scene description formats, such as glTF and USD.

glTF (GL Transmission Format) is a royalty-free specification for the efficient transmission and loading of 3D scenes and models by applications. glTF attempts to minimize both the size of 3D assets and the runtime processing needed to unpack and use those assets. glTF defines an extensible, common publishing format for 3D content tools and services that streamlines authoring workflows and enables interoperable use of content across the industry.

Universal Scene Description (USD) is a framework for interchange of 3D computer graphics data. The framework focuses on collaboration, non-destructive editing, and enabling multiple views and opinions about graphics data.

A scene description may also provide the possibility to describe specific content, e.g: by using the Khronos glTF vendor-specific extensions from the MPEG Scene description standard such as MPEG_interactivity or MPEG_anchor. The MPEG Scene description standard is described in ISO/IEC 23090-14 DAM 2: Support for Haptics, Augmented Reality, Avatars, Interactivity, MPEG-I Audio, and Lighting.

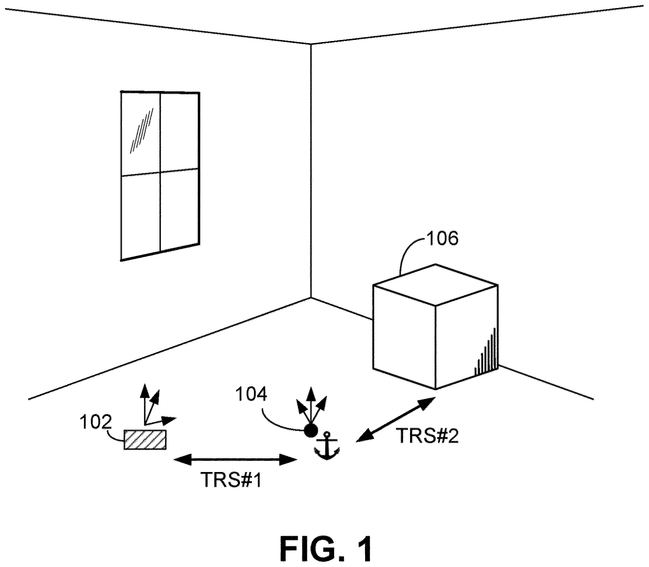

To support AR experiences where virtual content is seamlessly inserted into the user's real environment, the MPEG_anchor glTF extension provides to the content creator the possibility of describing the spatial relationships between the virtual objects and particular real locations. As shown in FIG. 1, the pose of a virtual asset is defined in the local space of an AR anchor. FIG. 1 includes an illustration of a trackable 102, an anchor 104 and a virtual asset 106. The AR anchor corresponds to a fixed position in the XR space of a trackable, which is an element of the real environment of which features are available and/or could be extracted. To support a variety of indoor and outdoor AR experiences, several types of trackable are defined such as, controller-based, horizontal, or vertical planes, 2D or 3D marker, geospatial coordinates.

Such a file can be consumed by a game engine, such as Unity or Unreal Engine to visualize and interact with the content of the 3D scene at runtime.

Event-driven architecture is a software architecture paradigm concerning the production and the detection of events. It may be applied to the systems that transmit events among loosely coupled software components and services. It typically consists of emitters and consumers, or listener and event channels. Emitters detect, gather and transfer events. They do not necessarily know the consumers of the event, and do not even necessarily know if a consumer exists. The consumer registers for an event type and is notified each time an event occurs.

### SUMMARY

Briefly stated, in one embodiment, a method comprises: parsing a scene description file describing a scene, the scene description file including at least a first property; in response to parsing of the first property, instantiating a first module associated with the first property; registering a game engine to receive events raised by the first module; operating the first module to detect a first condition in the scene indicated by the first property and responsively to raise a first event; and operating the game engine to respond to the first event.

An apparatus according to some embodiments comprises one or more processors configured to perform at least: parsing a scene description file describing a scene, the scene description file including at least a first property; in response to parsing of the first property, instantiating a first module associated with the first property; registering a game engine to receive events raised by the first module; operating the first module to detect a first condition in the scene indicated by the first property and responsively to raise a first event; and operating the game engine to respond to the first event.

A computer-readable medium according to some embodiments includes instructions for causing one or more processors to perform at least: parsing a scene description file describing a scene, the scene description file including at least a first property; in response to parsing of the first property, instantiating a first module associated with the first property; registering a game engine to receive events raised by the first module; operating the first module to detect a first condition in the scene indicated by the first property and responsively to raise a first event; and operating the game engine to respond to the first event.

In some embodiments, the first property is a trigger property; the scene description file associates the trigger property with at least one action property; and operating the game engine to respond to the first event comprises operating the game engine to implement an action associated with the action property.

In some embodiments, registering the game engine to receive events raised by the first module comprises calling a register method using an application programming interface, API, of the first module.

In some embodiments, registering the game engine to receive events raised by the first module comprises associating an event type of the first event with a first corresponding handler method.

In some embodiments, operating the game engine to respond to the first event comprises calling the first corresponding handler method in response to the first event.

Some embodiments further comprise unregistering the game engine from events raised by the first module.

Some embodiments further comprise unregistering the game engine from events raised by the first module by calling an unregister method using an application programming interface, API, of the first module.

In some embodiments, the scene description file further includes an action property, further comprising: in response to parsing of the action property, instantiating a second module associated with the action property; registering the game engine to receive events raised by the second module; operating the second module to detect a user input and responsively to raise a second event; and operating the game engine according to the user input in response to a notification of the second event.

In some embodiments, registering the game engine to receive events raised by the second module comprises associating an event type of the second event with a second corresponding handler method.

In some embodiments, registering the game engine to receive events raised by the second module comprises calling a register method using an application programming interface, API, of the second module.

Some embodiments further comprise unregistering the game engine from events raised by the second module by calling an unregister method using an application programming interface, API, of the second module.

In some embodiments, the scene description file further includes an anchor property, further comprising: in response to parsing of the anchor property, instantiating a third module associated with the anchor property; registering the game engine to receive events raised by the third module; operating the third module to detect an anchoring and responsively to raise a third event; and operating the game engine according to the anchoring indicated by the third event.

In some embodiments, registering the game engine to receive events raised by the third module comprises calling a register method using an application programming interface, API, of the third module.

Some embodiments further comprise unregistering the game engine from the third event.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a schematic illustration of an extended reality scene, showing the spatial relationship between a trackable, an anchor, and a virtual asset.
FIG. 2 is a schematic functional block diagram illustrating event-based processing of a scene description file according to one or more embodiments of the present disclosure.
FIG. 3 is a flow diagram illustrating a registering process of the game engine according to one or more embodiments of the present disclosure.
FIG. 4 is a flow diagram illustrating a runtime process according to one or more embodiments of the present disclosure.
FIG. 5 is a flow diagram illustrating an initialization portion of a game engine processing model according to one or more embodiments of the present disclosure.
FIG. 6 is a flow diagram illustrating a runtime portion of a game engine processing model according to one or more embodiments of the present disclosure.
FIG. 7 is a functional block diagram of a system on which one or more embodiments of the present disclosure may be implemented.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

When a parser reads a scene description file, it creates an adapted function for each of the functionalities provided in the scene description file. Such a function may be referred to as a scene description module. As an example, a parser that encounters a MPEG_interactivity extension, along with a trigger of type TRIGGER_COLLISION, should make sure that there is a physics engine, or a function to test the collision.

Event driven architectures are largely adopted, and a scene description module may be a good candidate to raise an event. In the previous example, a collision event may be raised when a collision occurs, according to its definition in the scene description file. In another example, if the parser encounters an MPEG_anchor extension, it should instantiate a function (a scene description module) that handles anchors, so that an event is raised when an anchoring has occurred, or when an anchor has moved.

All the parser and the scene description file are often instantiated or read in the context of a game engine, that allow real-time interactions and real-time visualization with the content.

Current technologies do not provide a way to listen to scene description module events on a game engine. It may be desirable to provide a way to enable timed event dependencies and create the link between game engine functionalities and scene description modules. For example, it may be desirable for a game engine to instantiate a particle system, based on an anchoring event described in the scene description it has received.

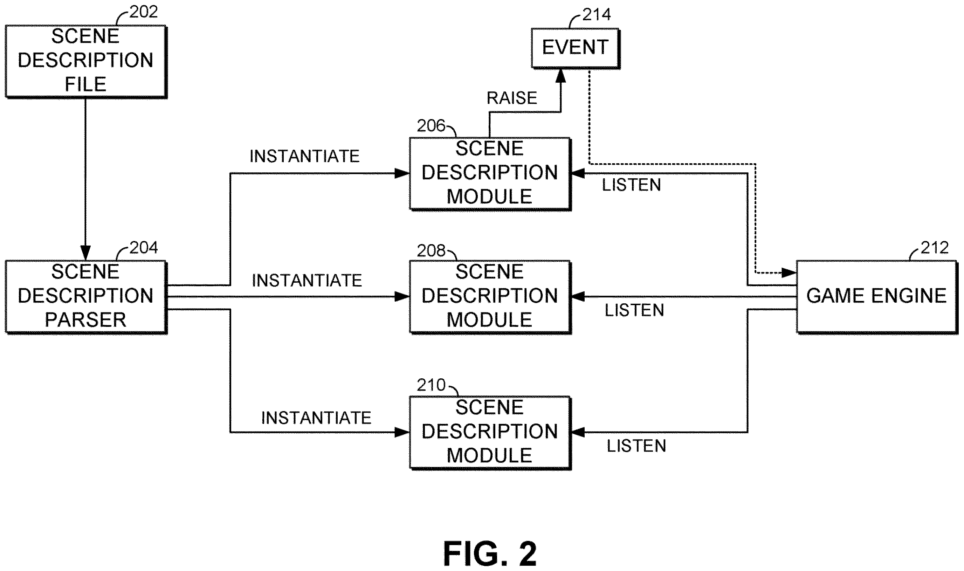

The present disclosure invention presents a system that allows a game engine to listen to events (listener) raised by scene description modules (that may be described as emitters). As illustrated in the FIG. 2, a scene description file 202 is parsed by a scene description parser 204. The scene description parser 204 instantiates scene description modules, such as modules 206, 208, 210. Each scene description module may be instantiated in response to the parsing of a particular property in the scene description file 202. For example, a scene description module may be instantiated in response to a trigger property, an action property, or an anchor property, among other possibilities. A game engine 212 registers to listen to events raised by the scene description modules. In the rendering of a scene, a scene description module may raise an event (e.g. identifying a collision or a user input, among other possibilities) such as event 214. The game engine 212 may then take action as appropriate in response to the event.

In an example embodiment, a game engine first parses a scene description file using a scene description parser. The scene description parser instantiates scene description modules for each feature. Each scene description module is designed to handle the processing for a specific feature, and the invocation of events.

Once the parsing is done, the game engine can listen to a specific set of events handled by the scene description modules. When a scene description module raises an event, the game engine is then notified that the event occurs. The game engine then reacts to this event.

The following is an example of an augmented reality (AR) use-case in which example embodiments may be employed. In this example, a furniture retailer can offer furniture on its website. The retailer may share the assets through Signal using 3GPP conforming containers, allowing a customer to obtain an asset representing a piece of furniture and to place the asset virtually in their home to check how it fits. In one such example, an Oculus Touch controller may be used, and a lamp may be described in the scene description file. The scene description may be provided in a gITF file, such as the following file (which has been simplified for clarity).

```
 { "asset":{
        "generator":"Khronos glTF Blender I/O v4.1.63",
        "version":"2.0"
    },
    "scene":0,
    "scenes":[
        {
             "name": "Scene",
             "nodes":[
                 0 ] }
    ],
    "extensionsUsed": [
        "MPEG_anchor",
        "MPEG_scene_interactivity"
    ],
    "extensions": {
        "MPEG_anchor": {
             "trackables": [
                 {
                     "type": 0
             } ],
             "anchors" : [
                 {
                     "trackable": 0,
                     "requiresAnchoring": true } ]
        },
        "MPEG_scene_interactivity": {
             "triggers": [
                 {
                     "type": 2,
                     "userInputDescription": "/user/hand/right/input/a/touch"
             } ],
             "actions": [
                 {
                     "type": 5,
                     "manipulateActionType": 2,
                     "userInputDescription": "/user/hand/right/input/grip/pose",
                     "nodes": [
                         0 ] }
             ],
             "behaviors": [
                 {
                     "triggers": [0],
                     "actions": [0],
                     "triggersCombinationControl": "#0",
                     "triggersActivationControl": 1,
                     "actionsControl": 0
    } ] } },
    "nodes":[
        {
             "mesh":0,
             "name":"Lamp",
             "extensions": {
                 "MPEG_anchor": {
                     "anchor": 0
                 } } } ],
    "materials":[
    ],
    "meshes":[
    ],
    "accessors":[
    ],
    "bufferViews":[
    ],
    "buffers":[
    ]
 }
```

The description uses the MPEG_anchor extension to initially position the lamp on the floor of the user living room, while the MPEG_interactivity extension is used to move this lamp relatively to the grip controller.

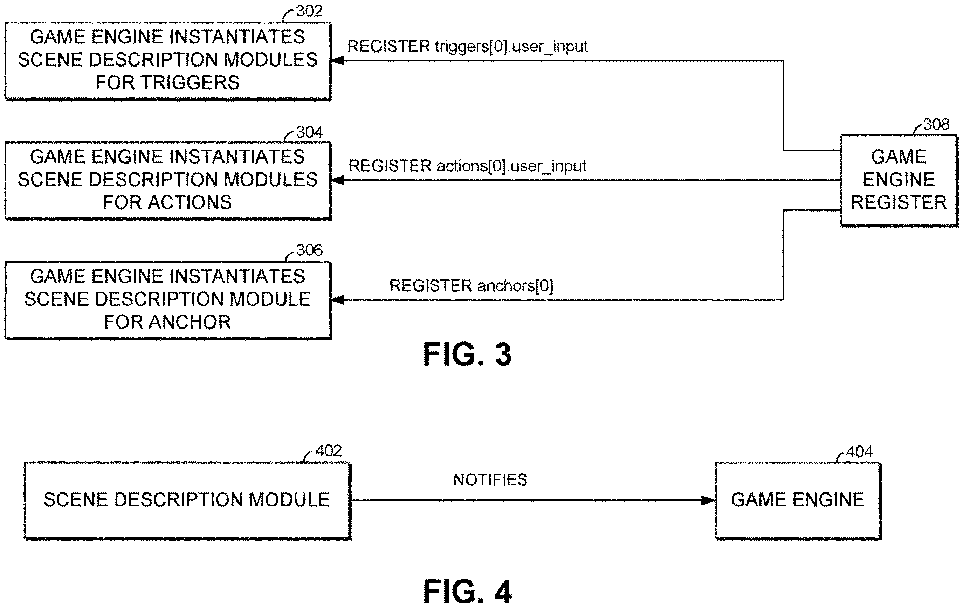

To help conceptualize the system, FIG. 3 illustrates a schema showing the registering process of the game engine.

After the parsing, the game engine instantiates a scene description module for each feature. For example, one scene description module (302) may be instantiated to handle triggers, one (304) to handle actions, and one (306) to handle anchors. Once done, the game engine register (308) registers to specific events, such as triggers[0].user_input, actions[0].user_input, and anchors[0].

When a scene description module 402 raises an event, it notifies the game engine 404, and the game engine can react accordingly, as illustrated in FIG. 4.

To implement such a scenario, it may be desirable for the position of the furniture to be expressed in the anchor space coordinates. This calculation function may be done by the game engine.

In embodiments of the present disclosure, the game engine may have multiple ways to handle events. In an example, the game engine may register for an anchoring event to the scene description module responsible for the anchoring. Once the anchoring is done, the game engine may unregister for that event (since it has been anchored, it may not need an update of this event). Also, when the anchoring is done, the game engine may register for two user input events described at the trigger and at the actions level. That allows to be notified as soon as the associated scene description modules send an event about a "user/hand/right/input/a/touch", or a "/user/hand/right/input/grip/pose". Once the game engine has placed the lamp, it can unregister from the user input scene description modules described earlier.

As seen from the example above, this invention provides two methods that could be part of a scene description module API: Register and Unregister:

Using a register method, the game engine may register for an event. This method may have the following signature:
Register<EventType>(OnEventOccurs, params[], ...);

The parameter OnEventOccurs is a handler method to be called on the game engine when the event with the type EventType has been raised by the scene description module. The params [ ] optionally provide any number of additional parameters that may be used. As an example, parameters can be used to indicate the number of event invocations the game engine has subscribed to (e.g.: Register for 10 events, then automatically unregister).

The scene description module may then check for the event and call the given method when the event has raised.

Using an unregister method, the game engine may also unregister for an event and such a method may have this signature:
Unregister<EventType>(OnEventOccurs, params[], ...);

The parameter OnEventOccurs is the method previously registered on the game engine.

The scene description module may then unregister this entry, and when an event occurs it will not call this method anymore. The parameter(s) params [ ] may optionally be used to indicate information to the scene description module. As an example, it might indicate that the game engine should wait a few seconds before being unregistered.

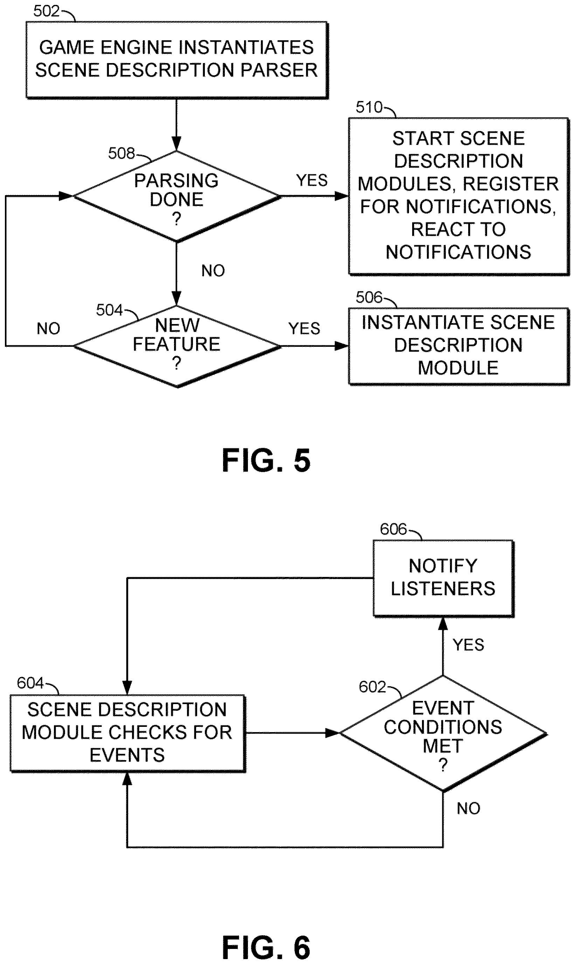

FIG. 5 is a flow diagram illustrating an initialization portion of a game engine processing model.

In an example embodiment, as shown in FIG. 5, the game engine instantiates at 502 a scene description parser that parses a scene description file. When the parser encounters a new feature, as determined at 504, the game engine instantiates at 506 a scene description module to handle this functionality. When the parsing is done as detected at 508, the scene description modules start at 510, and at any time, the game engine may register for events by specifying the scene description module it registers for, and it may give the function to be called when an event occurs.

At any time, the game engine may unregister for this event.

FIG. 6 is a flow diagram illustrating a runtime portion of a game engine processing model.

As illustrated in FIG. 6, a scene description module monitors conditions within the scene at 600. When a predetermined condition is met as determined at 602, the scene description module raises the corresponding event at 606 to notify listeners. The game engine reacts to notifications. Scene description modules continue monitoring and raise events as conditions are met.

### Example system hardware.

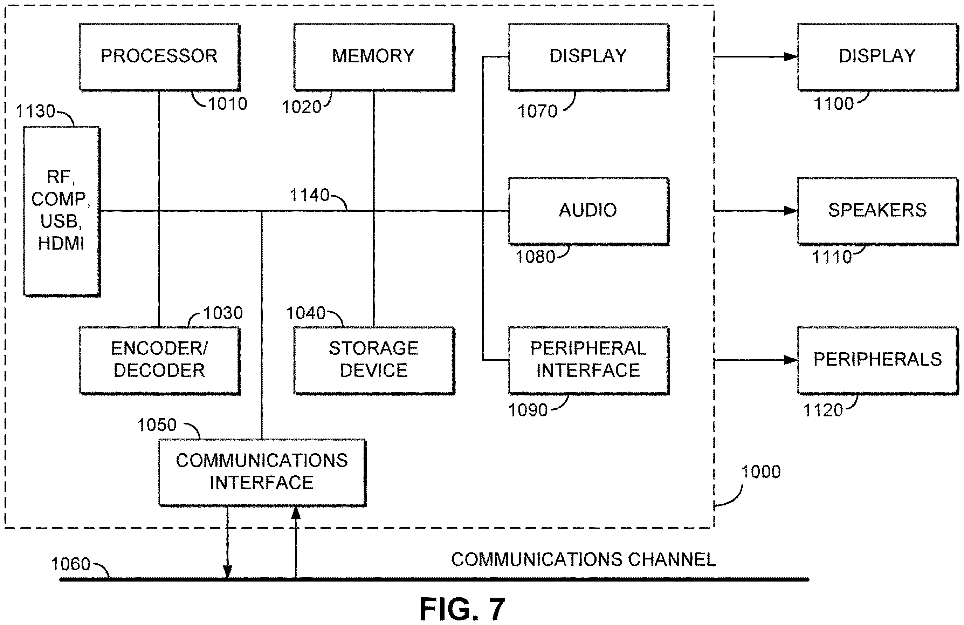

Example embodiments of an apparatus configured to implement embodiments described herein may be implemented using systems such as the system of FIG. 7. FIG. 7 is a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the main graph, one or more auxiliary graphs, poses, coordinate transformations, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

### Additional embodiments.

A method according to some embodiments comprises: parsing a scene description file describing a scene, the scene description file including at least a first property; in response to parsing of the first property, instantiating a first module associated with the first property; registering a game engine to receive events raised by the first module; operating the first module to detect a first condition in the scene indicated by the first property and responsively to raise a first event; and operating the game engine to respond to the first event.

An apparatus according to some embodiments comprises one or more processors configured to perform at least: parsing a scene description file describing a scene, the scene description file including at least a first property; in response to parsing of the first property, instantiating a first module associated with the first property; registering a game engine to receive events raised by the first module; operating the first module to detect a first condition in the scene indicated by the first property and responsively to raise a first event; and operating the game engine to respond to the first event.

A computer-readable medium according to some embodiments includes instructions for causing one or more processors to perform at least: parsing a scene description file describing a scene, the scene description file including at least a first property; in response to parsing of the first property, instantiating a first module associated with the first property; registering a game engine to receive events raised by the first module; operating the first module to detect a first condition in the scene indicated by the first property and responsively to raise a first event; and operating the game engine to respond to the first event.

In some embodiments, the first property is a trigger property; the scene description file associates the trigger property with at least one action property; and operating the game engine to respond to the first event comprises operating the game engine to implement an action associated with the action property.

In some embodiments, registering the game engine to receive events raised by the first module comprises calling a register method using an application programming interface, API, of the first module.

In some embodiments, registering the game engine to receive events raised by the first module comprises associating an event type of the first event with a first corresponding handler method.

In some embodiments, operating the game engine to respond to the first event comprises calling the first corresponding handler method in response to the first event.

Some embodiments further comprise unregistering the game engine from events raised by the first module.

Some embodiments further comprise unregistering the game engine from events raised by the first module by calling an unregister method using an application programming interface, API, of the first module.

In some embodiments, the scene description file further includes an action property, further comprising: in response to parsing of the action property, instantiating a second module associated with the action property; registering the game engine to receive events raised by the second module; operating the second module to detect a user input and responsively to raise a second event; and operating the game engine according to the user input in response to a notification of the second event.

In some embodiments, registering the game engine to receive events raised by the second module comprises associating an event type of the second event with a second corresponding handler method.

In some embodiments, registering the game engine to receive events raised by the second module comprises calling a register method using an application programming interface, API, of the second module.

Some embodiments further comprise unregistering the game engine from events raised by the second module by calling an unregister method using an application programming interface, API, of the second module.

In some embodiments, the scene description file further includes an anchor property, further comprising: in response to parsing of the anchor property, instantiating a third module associated with the anchor property; registering the game engine to receive events raised by the third module; operating the third module to detect an anchoring and responsively to raise a third event; and operating the game engine according to the anchoring indicated by the third event.

In some embodiments, registering the game engine to receive events raised by the third module comprises calling a register method using an application programming interface, API, of the third module.

Some embodiments further comprise unregistering the game engine from the third event.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
parsing a scene description file describing a scene, the scene description file including at least a first property;
in response to parsing of the first property, instantiating a first module associated with the first property;
registering a game engine to receive events raised by the first module;
operating the first module to detect a first condition in the scene indicated by the first property and responsively to raise a first event; and
operating the game engine to respond to the first event.

2. An apparatus comprising one or more processors configured to perform at least:
parsing a scene description file describing a scene, the scene description file including at least a first property;
in response to parsing of the first property, instantiating a first module associated with the first property;
registering a game engine to receive events raised by the first module;
operating the first module to detect a first condition in the scene indicated by the first property and responsively to raise a first event; and
operating the game engine to respond to the first event.

3. A computer-readable medium including instructions for causing one or more processors to perform at least:
parsing a scene description file describing a scene, the scene description file including at least a first property;
in response to parsing of the first property, instantiating a first module associated with the first property;
registering a game engine to receive events raised by the first module;
operating the first module to detect a first condition in the scene indicated by the first property and responsively to raise a first event; and
operating the game engine to respond to the first event.

4. The method of claim 1, the apparatus of claim 2, or the computer-readable medium of claim 3, wherein:
the first property is a trigger property;
the scene description file associates the trigger property with at least one action property; and
operating the game engine to respond to the first event comprises operating the game engine to implement an action associated with the action property.

5. The method of claim 1 or claim 4 as it depends from claim 1, the apparatus of claim 2 or claim 4 as it depends from claim 2, or the computer-readable medium of claim 3 or claim 4 as it depends from claim 3, wherein registering the game engine to receive events raised by the first module comprises calling a register method using an application programming interface, API, of the first module.

6. The method of claim 1 or claims 4-5 as they depend from claim 1, the apparatus of claim 2 or claims 4-5 as they depends from claim 2, or the computer-readable medium of claim 3 or claims 4-5 as they depends from claim 3, wherein registering the game engine to receive events raised by the first module comprises associating an event type of the first event with a first corresponding handler method.

7. The method of claim 6 as it depends from claim 1, the apparatus of claim 6 as it depends from claim 2, or the computer-readable medium of claim 6 as it depends from claim 3, wherein operating the game engine to respond to the first event comprises calling the first corresponding handler method in response to the first event.

8. The method of claim 1 or claims 4-7 as they depend from claim 1, the apparatus of claim 2 or claims 4-7 as they depend from claim 2, or the computer-readable medium of claim 3 or claims 4-7 as they depend from claim 3, further comprising unregistering the game engine from events raised by the first module.

9. The method of claim 1 or claims 4-7 as they depend from claim 1, the apparatus of claim 2 or claims 4-7 as they depend from claim 2, or the computer-readable medium of claim 3 or claims 4-7 as they depend from claim 3, further comprising unregistering the game engine from events raised by the first module by calling an unregister method using an application programming interface, API, of the first module.

10. The method of claim 1 or claims 4-9 as they depend from claim 1, the apparatus of claim 2 or claims 4-9 as they depend from claim 2, or the computer-readable medium of claim 3 or claims 4-9 as they depend from claim 3, wherein the scene description file further includes an action property, further comprising:
in response to parsing of the action property, instantiating a second module associated with the action property;
registering the game engine to receive events raised by the second module;
operating the second module to detect a user input and responsively to raise a second event; and
operating the game engine according to the user input in response to a notification of the second event.

11. The method of claim 10 as it depends from claim 1, the apparatus of claim 10 as it depends from claim 2, or the computer-readable medium of claim 10 as it depends from claim 3, wherein registering the game engine to receive events raised by the second module comprises associating an event type of the second event with a second corresponding handler method.

12. The method of claims 10-11 as they depend from claim 1, the apparatus of claims 10-11 as they depend from claim 2, or the computer-readable medium of claims 10-11 as they depend from claim 3, wherein registering the game engine to receive events raised by the second module comprises calling a register method using an application programming interface, API, of the second module.

13. The method of claims 10-12 as they depend from claim 1, the apparatus of claims 10-12 as they depend from claim 2, or the computer-readable medium of claims 10-12 as they depend from claim 3, further comprising unregistering the game engine from events raised by the second module by calling an unregister method using an application programming interface, API, of the second module.

14. The method of claims 4-13 as they depend from claim 1, the apparatus of claims 4-13 as they depend from claim 2, or the computer-readable medium of claims 4-13 as they depend from claim 3, wherein the scene description file further includes an anchor property, further comprising:
in response to parsing of the anchor property, instantiating a third module associated with the anchor property;
registering the game engine to receive events raised by the third module;
operating the third module to detect an anchoring and responsively to raise a third event; and
operating the game engine according to the anchoring indicated by the third event.

15. The method of claim 14 as it depends from claim 1, the apparatus of claim 14 as it depends from claim 2, or the computer-readable medium of claim 14 as it depends from claim 3, wherein registering the game engine to receive events raised by the third module comprises calling a register method using an application programming interface, API, of the third module.
